# EUROPÄISCHE PATENTSCHRIFT

(11) **EP 3 685 123 B1**
(45) Veröffentlichungstag und Bekanntmachung des Hinweises auf die Patenterteilung: **18.06.2025**
(21) Anmeldenummer: 18762265.9
(22) Anmeldetag: 28.08.2018
(51) Int. Cl.: G01C 21/36, G06T 19/00, G02B 27/01, B60K 35/00, G06T 15/20, B60K 35/23, B60K 35/28

(54) **VERFAHREN, VORRICHTUNG UND COMPUTERLESBARES SPEICHERMEDIUM MIT INSTRUKTIONEN ZUR STEUERUNG EINER ANZEIGE EINER AUGMENTED-REALITY-HEAD-UP-DISPLAY-VORRICHTUNG FÜR EIN KRAFTFAHRZEUG**
METHOD, DEVICE AND COMPUTER READABLE STORAGE MEDIUM WITH INSTRUCTIONS FOR CONTROLLING A DISPLAY OF AN AUGMENTED REALITY HEAD-UP DISPLAY DEVICE FOR A MOTOR VEHICLE
PROCÉDÉ, DISPOSITIF ET SUPPORT DE STOCKAGE LISIBLE PAR ORDINATEUR AVEC INSTRUCTIONS POUR COMMANDER L'AFFICHAGE D'UN DISPOSITIF D'AFFICHAGE TÊTE HAUTE DE RÉALITÉ AUGMENTÉE POUR UN VÉHICULE AUTOMOBILE

(30) Priorität: 21.09.2017 DE 102017216775
(43) Veröffentlichungstag der Anmeldung: 29.07.2020
(73) Patentinhaber: Volkswagen Aktiengesellschaft, 38440 Wolfsburg (DE)
(72) Erfinder: MAX, Stephan, 38518 Gifhorn (DE); WUTTKE, Ulrich, 38126 Braunschweig (DE)
(86) Internationale Anmeldenummer: PCT/EP2018/073155
(87) Internationale Veröffentlichungsnummer: WO 2019/057452

(56) Entgegenhaltungen:
- DE-A1- 10 138 719
- DE-A1- 102012 210 375
- US-A1- 2013 194 110
- US-B2- 9 625 270

## Beschreibung

Die vorliegende Erfindung betrifft ein Verfahren, eine Vorrichtung und ein computerlesbares Speichermedium mit Instruktionen zur Steuerung einer Anzeige einer Augmented-Reality-Head-Up-Display-Vorrichtung für ein Kraftfahrzeug. Die Erfindung betrifft weiterhin ein Kraftfahrzeug, in dem ein erfindungsgemäßes Verfahren oder eine erfindungsgemäße Vorrichtung eingesetzt werden.

Mit der stetigen Weiterentwicklung von Virtual & Augmented-Reality-Technologien und Augmented-Reality-Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt.

Eine mögliche technische Realisierung, um den Fahrerarbeitsplatz entsprechend mit perspektivisch korrekten virtuellen Erweiterungen anzureichern, bietet das Head-Up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeuges wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-HUDs beschränken sich jedoch auf Anzeigen direkt unter dem primären Sichtbereich des Fahrers und enthalten redundante Informationen, wie z.B. die Geschwindigkeitsanzeige, die auch an anderer Stelle im Cockpit wiederzufinden sind. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen. Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren.

In diesem Zusammenhang offenbart die DE 10 2010 013 232 A1 ein Head-Up-Display für ein Kraftfahrzeug. Das Head-Up-Display umfasst eine Anzeige mit Licht emittierenden Partikeln oder Mikrostrukturen über einem vordefinierten Gebiet der Frontscheibe, die eine lumineszierende Anzeige zulassen. Mittels Augenerfassungs- und Kopferfassungseinrichtungen wird eine Schätzung des Augenorts und eine Registrierung von Bildern im Head-Up-Display ermöglicht, sodass die Bilder einer Sicht des Bedieners entsprechen. Dabei können Kartendaten zur Bestimmung von Spurgeometrien genutzt werden.

Die DE 101 38 719 A1 beschreibt ein Verfahren zur Darstellung eines Fahrhinweises, insbesondere in Auto-Navigationssystemen. Bei dem Verfahren werden bei der Berechnung einer perspektivischen Darstellung aus der Sicht des Fahrers die Neigung des Fahrzeuges um seine Längs- und Querachse in Bezug auf die Straßenoberfläche sowie die Neigung der Straße bzw. die Dreidimensionalität des Geländes bei der Bildung eines eingeblendeten Fahrhinweises berücksichtigt, um eine bessere Übereinstimmung zwischen dem von der Fahrzeugkamera aufgenommenen Bild der Umgebung im Blickfeld des Fahrers und dem eingeblendeten Fahrhinweis zu ermöglichen.

Augmented Reality bietet vielfältige Anwendungsmöglichkeiten zur Unterstützung des Fahrers durch kontaktanaloge Markierung von Fahrbahnen und Objekten. Relativ naheliegende Beispiele beziehen sich meist auf den Bereich der Navigation. Während klassische Navigationsanzeigen in herkömmlichen HUDs in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, sind äußerst schnelle und intuitive Interpretationen durch den Nutzer möglich. In modernen Kraftfahrzeugen werden vielfältige Daten durch Umfeldsensoren erfasst. Ziel aktueller Entwicklungen ist es, diese Daten sinnvoll in Augmented-Reality-Darstellungen zu integrieren. Ein wichtiger Bestandteil der Darstellung sind Daten, welche direkt auf die Straßenebene gelegt werden.

Die US 9,625,270 B2 beschreibt ein Steuerverfahren für ein elektronisches Gerät. Bei dem Verfahren wird eine Position eines Fahrzeugs, das betrieben wird, bestimmt. Zudem werden unter Verwendung von Kartendaten Informationen zu einem Führungspunkt erfasst, der sich um eine vorbestimmte Entfernung vor der bestimmten Position des Fahrzeugs befindet. Unter Verwendung der Information zum Führungspunkt wird ein Objekt erzeugt, das den Führungspunkt anzeigt. Das so erzeugte Objekt wird schließlich mittels eines Augmented-Reality-Head-Up-Displays angezeigt.

Die US 2013/0194110 A1 beschreibt ein Augmented-Reality-Head-Up-Display für ein Kraftfahrzeug. Das Augmented-Reality-Head-Up-Display umfasst eine Betrachtungswinkel-Berechnungseinheit zum Schätzen einer Richtung einer Sichtlinie eines Fahrers unter Verwendung einer Gesichtsausrichtung, die auf der Grundlage von Bildern des Gesichts des Fahrers und der Mittenpositionen der Pupillen erkannt wird, und zum Berechnen eines Betrachtungswinkels. Eine Abgleicheinheit gleicht eine Position von Informationen aus der realen Welt, die sich vor einem Fahrersitz befindet, mit einer Position von entsprechenden Informationen über virtuelle Objekte, die sich vor dem Fahrersitz befinden, auf der Grundlage der Richtung der Sichtlinie und des Blickwinkels ab. Eine Anzeigeeinheit zeigt Ergebnisse der Anpassung durch die Anpassungseinheit an, wobei die Anzeigeeinheit deren Drehung und Ortsänderung ermöglicht.

Die DE 10 2012 210 375 A1 beschreibt ein Verfahren zum Betreiben eines Head-Up-Displays eines Fahrzeugs. Bei dem Verfahren werden vorgegebene Streckendaten für eine in Fahrtrichtung vor dem Fahrzeug liegende Fahrstrecke bereitgestellt. Ferner wird zumindest eine vorgegebene prädiktive Betriebsgröße für das Fahrzeug bereitgestellt. Abhängig von den Streckendaten wird ein dreidimensionales Modell für eine vorgegebene Umgebung des Fahrzeugs ermittelt. Ferner wird ein grafisches Element ermittelt abhängig von dem dreidimensionalen Modell und von der zumindest einen prädiktiven Betriebsgröße. Das Head-Up-Display weist ein vorgegebenes Anzeigefeld auf. Das grafische Element wird auf dem vorgegebenen Anzeigefeld angezeigt, wobei das grafische Element derart ermittelt und angezeigt wird, dass es von einem Betrachter des Anzeigefelds aus einer vorgegebenen Betrachtungsposition heraus mit einem direkten Bezug zu der realen Umgebung des Fahrzeugs wahrgenommen wird.

Eine Registrierung der virtuellen Informationen im realen Sichtfeld des Fahrers im Sinne von Augmented Reality stellt sehr hohe Anforderungen an die technische Umsetzung. Um virtuelle Inhalte ortsgenau und perspektivisch korrekt in der Realität darstellen zu können, ist sehr detailliertes Wissen über die Umgebung und Eigenbewegung des Fahrzeuges notwendig.

In Hinblick auf die Registrierung existieren eine Reihe von Herausforderungen. Beispielsweise hängt die konkrete Ebene, in oder auf der ein virtuelles Objekt dargestellt werden soll, von der Orientierung des Fahrzeugs ab. So wird z.B. durch eine Zuladung des Fahrzeugs der Neigungswinkel des Fahrzeugs stark beeinflusst. Zudem ist der Straßenverlauf in der Regel nicht planar. Je nach Ebenheit der Umgebung muss die Oberfläche der Fahrbahn daher fortlaufend vermessen werden. Bedingt durch möglichen Verkehr im Vorfeld des Fahrzeugs kann die Fahrbahnebene allerdings teilweise verdeckt sein, sodass sie nicht oder nur schwer durch die Sensorik des Fahrzeugs erfasst werden kann.

Es ist eine Aufgabe der Erfindung, verbesserte Lösungen zur Steuerung einer Anzeige einer Augmented-Reality-Head-Up-Display-Vorrichtung aufzuzeigen.

Diese Aufgabe wird durch ein Verfahren mit den Merkmalen des Anspruchs 1, durch ein computerlesbares Speichermedium mit Instruktionen gemäß Anspruch 6 und durch eine Vorrichtung mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige einer Augmented-Reality-Head-Up-Display-Vorrichtung für ein Kraftfahrzeug die Schritte:
- Bestimmen einer Pose des Kraftfahrzeugs relativ zu einer Karte;
- Extrahieren von Referenzpunkten aus der Karte, wobei die Referenzpunkte einer Fläche in einem Sichtbereich eines Fahrers des Kraftfahrzeugs entstammen und aus einer im Vorfeld berechneten geometrischen Abstraktion einer Topografie berechnet werden, die in der Karte abgelegt ist, und wobei die Referenzpunkte aus einem Kartenbereich in Fahrtrichtung des Kraftfahrzeugs extrahiert werden, der einen Grundbereich und einen von einer Geschwindigkeit des Kraftfahrzeugs abhängigen erweiterten Bereich umfasst;
- Transformieren der Referenzpunkte in Fahrzeugkoordinaten, wobei die transformierten Referenzpunkte den Verlauf einer Fläche repräsentieren, in der oder auf der ein virtuelles Objekt dargestellt werden soll;
- Generieren des virtuellen Objekts zur kontaktanalogen Anzeige durch die Augmented-Reality-Head-Up-Display-Vorrichtung unter Berücksichtigung der transformierten Referenzpunkte,
   wobei Grafikelemente des virtuellen Objekts derart an einen Verlauf der transformierten Referenzpunkte angepasst werden, dass der optische Eindruck entsteht, dass die Grafikelemente in der durch die transformierten Referenzpunkte repräsentierten Fläche liegen oder auf dieser Fläche stehen; und
- Ausgeben des virtuellen Objekts zur Anzeige durch die Augmented-Reality-Head-Up-Display-Vorrichtung.

Gemäß einem weiteren Aspekt der Erfindung enthält ein computerlesbares Speichermedium Instruktionen, die bei Ausführung durch einen Computer den Computer zur Ausführung der folgenden Schritte zur Steuerung einer Anzeige einer Augmented-Reality-Head-Up-Display-Vorrichtung für ein Kraftfahrzeug veranlassen:
- Bestimmen einer Pose des Kraftfahrzeugs relativ zu einer Karte;
- Extrahieren von Referenzpunkten aus der Karte, wobei die Referenzpunkte einer Fläche in einem Sichtbereich eines Fahrers des Kraftfahrzeugs entstammen und aus einer im Vorfeld berechneten geometrischen Abstraktion einer Topografie berechnet werden, die in der Karte abgelegt ist, und wobei die Referenzpunkte aus einem Kartenbereich in Fahrtrichtung des Kraftfahrzeugs extrahiert werden, der einen Grundbereich und einen von einer Geschwindigkeit des Kraftfahrzeugs abhängigen erweiterten Bereich umfasst;
- Transformieren des zumindest einen Referenzpunktes in Fahrzeugkoordinaten, wobei die transformierten Referenzpunkte den Verlauf einer Fläche repräsentieren, in der oder auf der ein virtuelles Objekt dargestellt werden soll;
- Generieren des virtuellen Objekts zur kontaktanalogen Anzeige durch die Augmented-Reality-Head-Up-Display-Vorrichtung unter Berücksichtigung der transformierten Referenzpunkte, wobei Grafikelemente des virtuellen Objekts derart an einen Verlauf der transformierten Referenzpunkte angepasst werden, dass der optische Eindruck entsteht, dass die Grafikelemente in der durch die transformierten Referenzpunkte repräsentierten Fläche liegen oder auf dieser Fläche stehen; und
- Ausgeben des virtuellen Objekts zur Anzeige durch die Augmented-Reality-Head-Up-Display-Vorrichtung.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zur Steuerung einer Anzeige einer Augmented-Reality-Head-Up-Display-Vorrichtung für ein Kraftfahrzeug auf:
- eine Posenbestimmungseinheit zum Bestimmen einer Pose des Kraftfahrzeugs relativ zu einer Karte;
- eine Extraktionseinheit zum Extrahieren von Referenzpunkten aus der Karte, wobei die Referenzpunkte einer Fläche in einem Sichtbereich eines Fahrers des Kraftfahrzeugs entstammen und aus einer im Vorfeld berechneten geometrischen Abstraktion einer Topografie berechnet wird, die in der Karte abgelegt ist, und wobei die Referenzpunkte aus einem Kartenbereich in Fahrtrichtung des Kraftfahrzeugs extrahiert werden, der einen Grundbereich und einen von einer Geschwindigkeit des Kraftfahrzeugs abhängigen erweiterten Bereich umfasst;
- eine Transformationseinheit zum Transformieren des zumindest einen Referenzpunktes in Fahrzeugkoordinaten, wobei die transformierten Referenzpunkte den Verlauf einer Fläche repräsentieren, in der oder auf der ein virtuelles Objekt dargestellt werden soll;
- eine Grafikeinheit zum Generieren des virtuellen Objekts zur kontaktanalogen Anzeige durch die Augmented-Reality-Head-Up-Display-Vorrichtung unter Berücksichtigung des zumindest einen transformierten Referenzpunktes, wobei Grafikelemente des virtuellen Objekts derart an einen Verlauf der transformierten Referenzpunkte angepasst werden, dass der optische Eindruck entsteht, dass die Grafikelemente in der durch die transformierten Referenzpunkte repräsentierten Fläche liegen oder auf dieser Fläche stehen; und
- einen Ausgang zum Ausgeben des virtuellen Objekts zur Anzeige durch die Augmented-Reality-Head-Up-Display-Vorrichtung.

Die erfindungsgemäße Lösung verwendet eine hochgenaue Karte mit Informationen zumindest über eine Straßenebene, die im Vorfeld vermessen wurde. Diese Informationen werden für die Erzeugung einer korrekten Augmented-Reality-Darstellung genutzt. Die Karte ist zugleich Grundlage für eine hochgenaue Lokalisierung des Fahrzeugs. Das Fahrzeug lokalisiert sich zunächst hinsichtlich Position und Ausrichtung relativ zur Karte. Aus den Kartendaten werden dann Referenzpunkte für die gewünschte Darstellungsebene ermittelt, beispielsweise Bodenpunkte. Diese Referenzpunkte werden in Fahrzeugkoordinaten transformiert und repräsentieren die Fläche, in oder auf der ein virtuelles Objekt dargestellt werden soll. Zur Erzeugung der Augmented-Reality-Darstellung des Head-Up-Displays werden nun die Grafikelemente des virtuellen Objekts an den Verlauf der transformierten Referenzpunkte angepasst, sodass der optische Eindruck entsteht, dass die Grafikelemente in der gewünschten Fläche liegen bzw. auf der gewünschten Fläche stehen.

Erfindungsgemäß werden die Referenzpunkte aus einer im Vorfeld berechneten geometrischen Abstraktion einer Topografie berechnet, die in der Karte abgelegt ist. Beispielsweise kann die geometrische Abstraktion der Topografie eindimensionale oder zweidimensionale Polynome oder ein Gitternetz umfassen. Um das Datenvolumen der Karte in einem vertretbaren Rahmen zu halten, ist es sinnvoll, lediglich eine näherungsweise Beschreibung der Topografie in der Karte abzulegen. Für eine solche Abstraktion bieten sich Polynome oder ein Gitternetz an. Die Referenzpunkte können dann auf einfache Weise je nach Bedarf aus den Daten der Karte berechnet oder interpoliert werden.

Erfindungsgemäß werden die Referenzpunkte aus einem Kartenbereich in Fahrtrichtung des Kraftfahrzeugs extrahiert. Dabei umfasst der Kartenbereich einen Grundbereich und einen von einer Geschwindigkeit des Kraftfahrzeugs abhängigen erweiterten Bereich. Durch die Extraktion von Referenzpunkten aus einem Kartenbereich in Fahrtrichtung des Kraftfahrzeugs ist sichergestellt, dass die Referenzpunkte zuverlässig im Sichtbereich des Fahrers liegen. Durch den von der Geschwindigkeit des Kraftfahrzeugs abhängigen erweiterten Bereich kann insbesondere bei höheren Geschwindigkeiten gewährleistet werden, dass auch für einen weiter entfernten Bereich, der aufgrund der höheren Geschwindigkeit in relativ kurzer Zeit erreicht wird, bereits ein geeigneter Referenzpunkt vorliegt.

Gemäß einem Aspekt der Erfindung ist die Fläche im Sichtbereich des Fahrers des Kraftfahrzeugs, der die Referenzpunkte entstammen, eine Bodenfläche. In der Regel sollen die virtuellen Elemente als auf dem Boden liegend oder stehend wahrgenommen werden. Zu diesem Zweck ist eine Kenntnis der Bodenfläche erforderlich. Zudem lässt sich die Bodenfläche, d.h. in der Regel die Straßenoberfläche, im Vorfeld relativ einfach für die Bereitstellung der Kartendaten erfassen.

Gemäß einem Aspekt der Erfindung werden beim Generieren des virtuellen Objekts Grafikelemente des virtuellen Objekts auf die Bodenfläche transformiert und verzerrt. Auf diese Weise wird der optische Eindruck erzielt, dass das virtuelle Objekt, beispielsweise eine Navigationsanweisung oder ein Warnhinweis, direkt auf dem Boden liegt.

Gemäß einem Aspekt der Erfindung werden zum Bestimmen der Pose des Kraftfahrzeugs relativ zur Karte Merkmale, die von einer Sensorik des Kraftfahrzeugs erkannt wurden, mit Merkmalen der Karte korreliert. Ein Fahrzeug kann sich hochgenau orten, wenn es in einer bereits vermessenen Umgebung bzw. Karte fährt. Dabei werden die vom Fahrzeug erkannten Merkmale auf die bereits vermessenen Merkmale korreliert, um so die Position und Ausrichtung des Fahrzeugs zu ermitteln. Beispiele für Merkmale, die dazu verwendet werden können, sind Spurmarkierungen, andere Bodenmarkierungen, Fahrbahnränder, Ampeln, Verkehrszeichen oder Landmarken in der Nähe der Fahrbahn.

Besonders vorteilhaft werden ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Steuerung einer Anzeige einer Augmented-Reality-Head-Up-Display-Vorrichtung für ein Kraftfahrzeug;
- Fig. 2: zeigt eine erste Ausführungsform einer Vorrichtung zur Steuerung einer Anzeige einer Augmented-Reality-Head-Up-Display-Vorrichtung für ein Kraftfahrzeug;
- Fig. 3: zeigt eine zweite Ausführungsform einer Vorrichtung zur Steuerung einer Anzeige einer Augmented-Reality-Head-Up-Display-Vorrichtung für ein Kraftfahrzeug;
- Fig. 4: stellt schematisch ein Kraftfahrzeug dar, in dem eine erfindungsgemäße Lösung realisiert ist;
- Fig. 5: zeigt schematisch den allgemeinen Aufbau einer Head-Up-Display-Vorrichtung für ein Kraftfahrzeug;
- Fig. 6: zeigt ein Beispiel einer Augmented-Reality-Darstellung einer Head-Up-Display-Vorrichtung; und
- Fig. 7: zeigt einen Systementwurf der erfindungsgemäßen Lösung zur Steuerung einer Anzeige einer Augmented-Reality-Head-Up-Display-Vorrichtung für ein Kraftfahrzeug.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

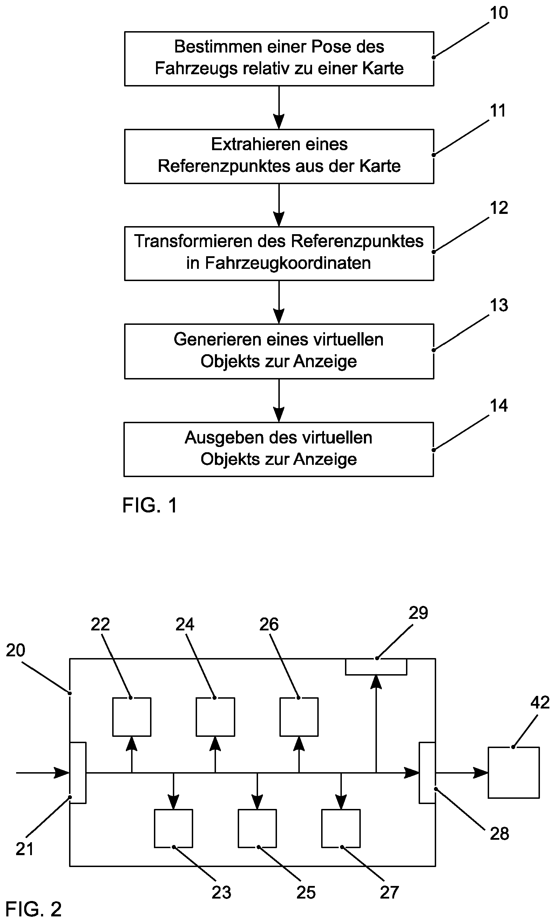

Fig. 1 zeigt schematisch ein Verfahren zur Steuerung einer Anzeige einer Augmented-Reality-Head-Up-Display-Vorrichtung für ein Kraftfahrzeug. In einem ersten Schritt wird eine Pose des Kraftfahrzeugs relativ zu einer Karte bestimmt 10. Zu diesem Zweck können Merkmale, die von einer Sensorik des Kraftfahrzeugs erkannt wurden, mit Merkmalen der Karte korreliert werden. Anschließend werden Referenzpunkte aus der Karte extrahiert 11, wobei die Referenzpunkte einer Fläche in einem Sichtbereich eines Fahrers des Kraftfahrzeugs entstammen. Die Referenzpunkt werden dabei aus einem Kartenbereich in Fahrtrichtung des Kraftfahrzeugs extrahiert. Dabei umfasst der Kartenbereich einen Grundbereich und einen von einer Geschwindigkeit des Kraftfahrzeugs abhängigen erweiterten Bereich. Die Referenzpunkte werden aus einer im Vorfeld berechneten geometrischen Abstraktion einer Topografie berechnet, die in der Karte abgelegt ist, z.B. in Form von eindimensionalen oder zweidimensionalen Polynomen oder als Gitternetz. Bei der Fläche im Sichtbereich des Fahrers kann es sich z.B. um eine Bodenfläche handeln. Nach einer Transformation 12 der Referenzpunkte in Fahrzeugkoordinaten wird unter Berücksichtigung der transformierten Referenzpunkte ein virtuelles Objekt zur Anzeige durch die Augmented-Reality-Head-Up-Display-Vorrichtung generiert 13. Dabei werden Grafikelemente des virtuellen Objekts auf die Fläche, insbesondere eine Bodenfläche, transformiert und verzerrt. Das virtuelle Objekt wird schließlich zur Anzeige durch die Augmented-Reality-Head-Up-Display-Vorrichtung ausgegeben 14.

Fig. 2 zeigt eine vereinfachte schematische Darstellung einer ersten Ausführungsform einer Vorrichtung 20 zur Steuerung einer Anzeige einer Augmented-Reality-Head-Up-Display-Vorrichtung für ein Kraftfahrzeug. Die Vorrichtung 20 hat einen Eingang 21, über den Daten einer Sensorik empfangen werden können, z.B. von einer Frontkamera des Kraftfahrzeugs oder von Lidar-, Radar- oder Ultraschallsensoren. Die Vorrichtung 20 hat zudem eine Posenbestimmungseinheit 22 zum Bestimmen einer Pose des Kraftfahrzeugs relativ zu einer Karte. Zu diesem Zweck kann die Posenbestimmungseinheit 22 beispielsweise Merkmale, die von einer Sensorik des Kraftfahrzeugs erkannt wurden, mit Merkmalen der Karte korrelieren. Eine Extraktionseinheit 23 extrahiert Referenzpunkte aus der Karte, wobei die Referenzpunkte einer Fläche in einem Sichtbereich eines Fahrers des Kraftfahrzeugs entstammen. Die Extraktionseinheit 23 extrahiert die Referenzpunkte aus einem Kartenbereich in Fahrtrichtung des Kraftfahrzeugs. Dabei umfasst der Kartenbereich einen Grundbereich und einen von einer Geschwindigkeit des Kraftfahrzeugs abhängigen erweiterten Bereich. Die Referenzpunkte werden aus einer im Vorfeld berechneten geometrischen Abstraktion einer Topografie berechnet, die in der Karte abgelegt ist, z.B. in Form von eindimensionalen oder zweidimensionalen Polynomen oder als Gitternetz. Bei der Fläche im Sichtbereich des Fahrers kann es sich z.B. um eine Bodenfläche handeln. Eine Transformationseinheit 24 transformiert die Referenzpunkte in Fahrzeugkoordinaten. Eine Grafikeinheit 25 generiert dann unter Berücksichtigung der transformierten Referenzpunkte ein virtuelles Objekt zur Anzeige durch die Augmented-Reality-Head-Up-Display-Vorrichtung. Dabei transformiert und verzerrt die Grafikeinheit 25 Grafikelemente des virtuellen Objekts auf die Fläche, insbesondere eine Bodenfläche. Über einen Ausgang 28 der Vorrichtung 20 wird das generierte virtuelle Objekt an ein Steuergerät 42 der Augmented-Reality-Display-Vorrichtung ausgegeben. Alternativ kann auch lediglich eine Anweisung an das Steuergerät 42 ausgegeben werden, ein entsprechendes virtuelles Objekt zu generieren. Das Steuergerät 42 kann dann das generierte virtuelle Objekt in eine Anzeige der Augmented-Reality-Head-Up-Display-Vorrichtung einfügen.

Die Posenbestimmungseinheit 22, die Extraktionseinheit 23, die Transformationseinheit 24 und die Grafikeinheit 25 können von einer Kontrolleinheit 26 gesteuert werden. Über eine Benutzerschnittstelle 29 können gegebenenfalls Einstellungen der Posenbestimmungseinheit 22, der Extraktionseinheit 23, der Transformationseinheit 24, der Grafikeinheit 25 oder der Kontrolleinheit 26 geändert werden. Die in der Vorrichtung 20 anfallenden Daten können bei Bedarf in einem Speicher 27 der Vorrichtung 20 abgelegt werden, beispielsweise für eine spätere Auswertung oder für eine Nutzung durch die Komponenten der Vorrichtung 20. Die Posenbestimmungseinheit 22, die Extraktionseinheit 23, die Transformationseinheit 24, die Grafikeinheit 25 sowie die Kontrolleinheit 26 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 28 können als getrennte Schnittstellen oder als eine kombinierte bidirektionale Schnittstelle implementiert sein. Vorzugsweise ist die Vorrichtung 20 in das Steuergerät 42 der Augmented-Reality-Head-Up-Display-Vorrichtung integriert.

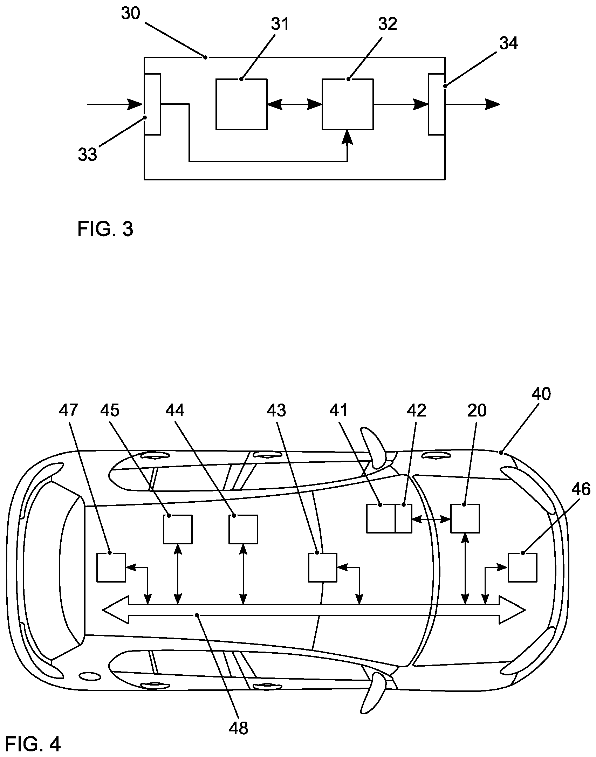

Fig. 3 zeigt eine vereinfachte schematische Darstellung einer zweiten Ausführungsform einer Vorrichtung 30 zur Steuerung einer Anzeige einer Augmented-Reality-Head-Up-Display-Vorrichtung für ein Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Daten einer Sensorik, z.B. von einer Frontkamera des Kraftfahrzeugs oder von Lidar-, Radar- oder Ultraschallsensoren. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 27, 31 der beschriebenen Ausführungsformen können sowohl volatile als auch nicht-volatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist eine Augmented-Reality-Head-Up-Display-Vorrichtung 41 mit einem zugehörigen Steuergerät 42 auf. Weiterhin weist das Kraftfahrzeug 40 eine Vorrichtung 20 zur Steuerung einer Anzeige der Augmented-Reality-Head-Up-Display-Vorrichtung 41 auf. Die Vorrichtung 20 kann auch in das Steuergerät 42 für die Augmented-Reality-Head-Up-Display-Vorrichtung 41 integriert sein. Weitere Komponenten des Kraftfahrzeugs 40 sind eine Sensorik 43, ein Navigationssystem 44, eine Datenübertragungseinheit 45 sowie eine Reihe von Assistenzsystemen 46, von denen eines exemplarisch dargestellt ist. Mittels der Datenübertragungseinheit 45 kann beispielsweise eine Verbindung zu Dienstanbietern aufgebaut werden. Mittels der Sensorik 43, die beispielsweise eine Kamera sowie Lidar-, Radar- oder Ultraschallsensoren umfassen kann, können unter anderem Informationen zur Fahrbahn und zur Fahrzeugumgebung erfasst werden. Zur Speicherung von Daten ist ein Speicher 47 vorhanden. Der Datenaustausch zwischen den verschiedenen Komponenten des Kraftfahrzeugs 40 erfolgt über ein Netzwerk 48.

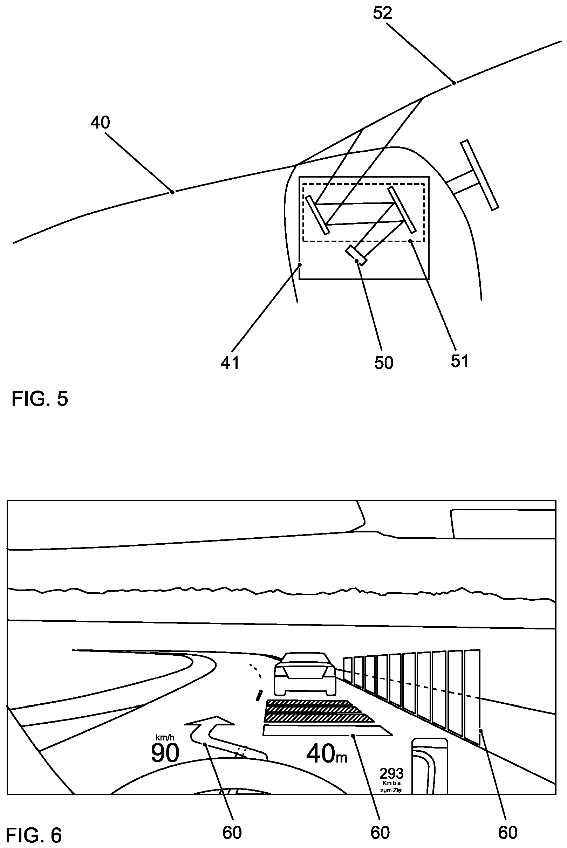

Fig. 5 zeigt schematisch eine Head-Up-Display-Vorrichtung 41 für ein Kraftfahrzeug 40, mit deren Hilfe Inhalte auf einer Projektionsfläche 52 des Kraftfahrzeugs 40 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 50 erzeugt und mit Hilfe eines optischen Moduls 51 auf die Projektionsfläche 52 projiziert. Typischerweise erfolgt die Projektion dabei in einen Bereich der Frontscheibe oberhalb des Lenkrades. Die bildgebende Einheit 50 kann beispielsweise ein LCD-TFT-Display sein. Die Augmented-Reality-Head-Up-Display-Vorrichtung 41 ist in der Regel in einem Armaturenbrett des Kraftfahrzeugs 40 verbaut.

Fig. 6 zeigt ein Beispiel einer Augmented-Reality-Darstellung einer Augmented-Reality-Head-Up-Display-Vorrichtung. Der tatsächlichen Umgebung sind eine Reihe von Elementen überlagert. Im Beispiel in Fig. 6 sind dies eine aktuelle Geschwindigkeit, ein Abstand zu einem vorausfahrenden Fahrzeug sowie Navigationsinformationen. Daneben sind einige virtuelle Objekte 60 in kontaktanaloger Darstellung zu sehen, konkret ein Hinweispfeil für ein mögliches oder bevorstehendes Überholmanöver, eine visuelle Darstellung des Abstands zu einem vorausfahrenden Fahrzeug sowie eine "virtuelle Wand" auf der rechten Seitenlinie als Sicherheitshinweis. Die dargestellten Elemente beruhen überwiegend auf Informationen, die von Fahrzeugsensoren erfasst wurden. Für die konkrete Gestaltung der Darstellung stehen dem Fachmann vielfältige Gestaltungsmöglichkeiten zur Verfügung.

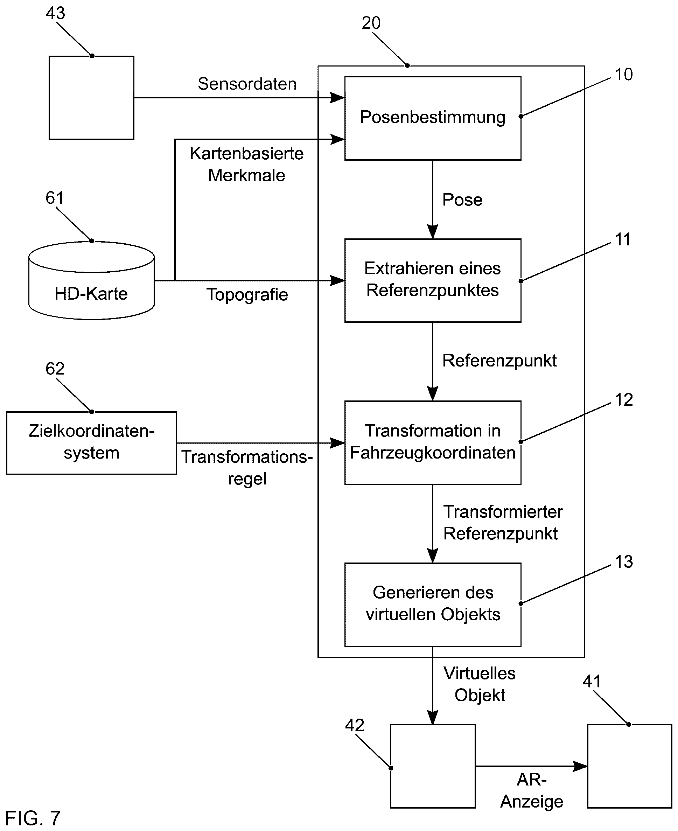

Fig. 7 zeigt einen vereinfachten Systementwurf der erfindungsgemäßen Lösung zur Steuerung einer Anzeige einer Augmented-Reality-Head-Up-Display-Vorrichtung 41 für ein Kraftfahrzeug. Im Kraftfahrzeug wird eine Karte 61 vorgehalten, die unter anderem Angaben zu bereits vermessenen statischen Merkmalen enthält. Beispiele solcher statischer Merkmale sind Spurmarkierungen, andere Bodenmarkierungen, Fahrbahnränder, Ampeln, Verkehrszeichen oder Landmarken in der Nähe der Fahrbahn. Die Karte 61 kann von einem Dienstleister zur Verfügung gestellt werden und beispielsweise in einem Speicher des Navigationssystems abgelegt sein. Die kartenbasierten Merkmale werden für den Bereich unmittelbar vor dem Kraftfahrzeug an die Vorrichtung 20 zur Steuerung der Anzeige der Augmented-Reality-Head-Up-Display-Vorrichtung 41 transferiert. Hierzu kann exemplarisch das PSD-Protokoll (PSD: Prädiktive Streckendaten) verwendet werden. Durch eine Korrelation von aus Sensordaten einer Sensorik 43 erkannten statischen Merkmalen mit den aus der Karte 61 bekannten statischen Merkmalen wird die Pose des Kraftfahrzeugs relativ zur Karte 61 ermittelt 10. Unter Berücksichtigung der so bestimmten Pose wird zumindest ein Referenzpunkt aus der Karte 61 extrahiert 11. Zu diesem Zweck beinhaltet die Karte Informationen zur Topografie, vorzugsweise in Form einer geometrischen Abstraktion der Topografie. Die genaue Position und Ausrichtung der Sensorik 43 ist Fertigungstoleranzen unterworfen und kann zwischen verschiedenen Kraftfahrzeugen abweichen. Die Sensorik 43 wird daher im Rahmen der Produktion kalibriert oder ihre Position und Ausrichtung werden im laufenden Betrieb geschätzt. Die resultierenden Parameter werden im Fahrzeug gespeichert. Der Referenzpunkt wird daher entsprechend der zugehörigen Transformationsregel auf ein Fahrzeugreferenzkoordinatensystem oder Zielkoordinatensystem 62 umgerechnet 12, z.B. die Mitte der Vorderachse. So werden alle Ungenauigkeiten beseitigt, welche die Sensorik 43 betreffen. Unter Berücksichtigung des transformierten Referenzpunktes wird schließlich ein virtuelles Objekt generiert 13 und an ein Steuergerät 42 der Augmented-Reality-Head-Up-Display-Vorrichtung 41 ausgegeben. Alternativ kann auch lediglich eine Anweisung an das Steuergerät 42 ausgegeben werden, ein entsprechendes virtuelles Objekt zu generieren. Das Steuergerät 42 kann dann das generierte virtuelle Objekt in eine Anzeige der Augmented-Reality-Head-Up-Display-Vorrichtung 41 einfügen.

### Bezugszeichenliste

- 10: Bestimmen einer Pose des Fahrzeugs relativ zu einer Karte
- 11: Extrahieren von Referenzpunkten aus der Karte
- 12: Transformieren der Referenzpunkte in Fahrzeugkoordinaten
- 13: Generieren eines virtuellen Objekts zur Anzeige
- 14: Ausgeben des virtuellen Objekts zur Anzeige
- 20: Vorrichtung
- 21: Eingang
- 22: Posenbestimmungseinheit
- 23: Extraktionseinheit
- 24: Transformationseinheit
- 25: Grafikeinheit
- 26: Kontrolleinheit
- 27: Speicher
- 28: Ausgang
- 29: Benutzerschnittstelle
- 30: Vorrichtung
- 31: Speicher
- 32: Prozessor
- 33: Eingang
- 34: Ausgang
- 40: Kraftfahrzeug
- 41: Augmented-Reality-Head-Up-Display-Vorrichtung
- 42: Steuergerät der Augmented-Reality-Head-Up-Display-Vorrichtung
- 43: Sensorik
- 44: Navigationssystem
- 45: Datenübertragungseinheit
- 46: Assistenzsystem
- 47: Speicher
- 48: Netzwerk
- 50: Bildgebende Einheit
- 51: Optisches Modul
- 52: Projektionsfläche
- 60: Virtuelles Objekt
- 61: Kartendaten
- 62: Zielkoordinatensystem

## Patentansprüche

1. Verfahren zur Steuerung einer Anzeige einer Augmented-Reality-Head-Up-Display-Vorrichtung (41) für ein Kraftfahrzeug (40), mit den Schritten:
- Bestimmen (10) einer Pose des Kraftfahrzeugs (40) relativ zu einer Karte;
- Extrahieren (11) von Referenzpunkten aus der Karte, wobei die Referenzpunkte einer Fläche in einem Sichtbereich eines Fahrers des Kraftfahrzeugs (40) entstammen und aus einer im Vorfeld berechneten geometrischen Abstraktion einer Topografie berechnet werden, die in der Karte abgelegt ist, und wobei die Referenzpunkte aus einem Kartenbereich in Fahrtrichtung des Kraftfahrzeugs (40) extrahiert werden, der einen Grundbereich und einen von einer Geschwindigkeit des Kraftfahrzeugs (40) abhängigen erweiterten Bereich umfasst;
- Transformieren (12) der Referenzpunkte in Fahrzeugkoordinaten, wobei die transformierten Referenzpunkte den Verlauf einer Fläche repräsentieren, in der oder auf der ein virtuelles Objekt (60) dargestellt werden soll;
- Generieren (13) des virtuellen Objekts (60) zur kontaktanalogen Anzeige durch die Augmented-Reality-Head-Up-Display-Vorrichtung (41) unter Berücksichtigung der transformierten Referenzpunkte, wobei Grafikelemente des virtuellen Objekts (60) derart an einen Verlauf der transformierten Referenzpunkte angepasst werden, dass der optische Eindruck entsteht, dass die Grafikelemente in der durch die transformierten Referenzpunkte repräsentierten Fläche liegen oder auf dieser Fläche stehen; und
- Ausgeben (14) des virtuellen Objekts (60) zur Anzeige durch die Augmented-Reality-Head-Up-Display-Vorrichtung (41).

2. Verfahren gemäß Anspruch 1, wobei die geometrische Abstraktion der Topografie eindimensionale oder zweidimensionale Polynome oder ein Gitternetz umfasst.

3. Verfahren gemäß Anspruch 1 oder 2, wobei die Fläche im Sichtbereich des Fahrers des Kraftfahrzeugs (40), der die Referenzpunkte entstammen, eine Bodenfläche ist.

4. Verfahren gemäß Anspruch 3, wobei beim Generieren (12) des virtuellen Objekts (60) Grafikelemente des virtuellen Objekts (60) auf die Bodenfläche transformiert und verzerrt werden.

5. Verfahren gemäß einem der vorherigen Ansprüche, wobei zum Bestimmen (10) der Pose des Kraftfahrzeugs (40) relativ zur Karte Merkmale, die von einer Sensorik (43) des Kraftfahrzeugs (40) erkannt wurden, mit Merkmalen der Karte korreliert werden.

6. Computerlesbares Speichermedium mit Instruktionen, die bei Ausführung durch einen Computer den Computer zur Ausführung der Schritte eines Verfahrens gemäß einem der Ansprüche 1 bis 5 zur Steuerung einer Anzeige einer Augmented-Reality-Head-Up-Display-Vorrichtung (41) für ein Kraftfahrzeug (40) veranlassen.

7. Vorrichtung (20) zur Steuerung einer Anzeige einer Augmented-Reality-Head-Up-Display-Vorrichtung (41) für ein Kraftfahrzeug (40), mit:
- einer Posenbestimmungseinheit (22) zum Bestimmen (10) einer Pose des Kraftfahrzeugs (40) relativ zu einer Karte;
- einer Extraktionseinheit (23) zum Extrahieren (11) von Referenzpunkten aus der Karte, wobei die Referenzpunkte einer Fläche in einem Sichtbereich eines Fahrers des Kraftfahrzeugs (40) entstammen und aus einer im Vorfeld berechneten geometrischen Abstraktion einer Topografie berechnet werden, die in der Karte abgelegt ist, und wobei die Referenzpunkte aus einem Kartenbereich in Fahrtrichtung des Kraftfahrzeugs (40) extrahiert werden, der einen Grundbereich und einen von einer Geschwindigkeit des Kraftfahrzeugs (40) abhängigen erweiterten Bereich umfasst;
- einer Transformationseinheit (24) zum Transformieren (12) der Referenzpunkte in Fahrzeugkoordinaten, wobei die transformierten Referenzpunkte den Verlauf einer Fläche repräsentieren, in der oder auf der ein virtuelles Objekt (60) dargestellt werden soll;
- einer Grafikeinheit (25) zum Generieren (13) des virtuellen Objekts (60) zur kontaktanalogen Anzeige durch die Augmented-Reality-Head-Up-Display-Vorrichtung (41) unter Berücksichtigung der transformierten Referenzpunkte, wobei Grafikelemente des virtuellen Objekts (60) derart an einen Verlauf der transformierten Referenzpunkte angepasst werden, dass der optische Eindruck entsteht, dass die Grafikelemente in der durch die transformierten Referenzpunkte repräsentierten Fläche liegen oder auf dieser Fläche stehen; und
- einem Ausgang (28) zum Ausgeben (14) des virtuellen Objekts (60) zur Anzeige durch die Augmented-Reality-Head-Up-Display-Vorrichtung (41).

8. Kraftfahrzeug (40) mit einer Augmented-Reality-Head-Up-Display-Vorrichtung (41), **dadurch gekennzeichnet, dass** das Kraftfahrzeug (40) eine Vorrichtung (20) gemäß Anspruch 7 aufweist oder eingerichtet ist, ein Verfahren gemäß einem der Ansprüche 1 bis 5 zur Steuerung einer Anzeige der Augmented-Reality-Head-Up-Display-Vorrichtung (41) auszuführen.

## Claims

1. Method for controlling a display of an augmented reality head-up display device (41) for a motor vehicle (40), comprising the following steps:
- determining (10) a pose of the motor vehicle (40) relative to a map;
- extracting (11) reference points from the map, wherein the reference points originate from a surface in a field of view of a driver of the motor vehicle (40) and are calculated from a previously calculated geometric abstraction of a topography stored in the map, and wherein the reference points are extracted from a map region in the direction of travel of the motor vehicle (40), which map region comprises a main region and an extended region dependent on a speed of the motor vehicle (40);
- transforming (12) the reference points into vehicle coordinates, wherein the transformed reference points represent the course of a surface in or on which a virtual object (60) is to be displayed;
- generating (13) the virtual object (60) for contact-analogous display by the augmented reality head-up display device (41), taking into account the transformed reference points, wherein graphic elements of the virtual object (60) are adapted to a course of the transformed reference points in such a way that the visual impression is created whereby the graphic elements lie in the surface represented by the transformed reference points or are positioned on this surface; and - outputting (14) the virtual object (60) for display by the augmented reality head-up display device (41).

2. Method according to claim 1, wherein the geometric abstraction of the topography comprises one-dimensional or two-dimensional polynomials or a grid.

3. Method according to claim 1 or 2, wherein the surface in the field of vision of the driver of the motor vehicle (40) from which the reference points originate is a ground surface.

4. Method according to claim 3, wherein, during the generation (12) of the virtual object (60), graphic elements of the virtual object (60) are transformed and distorted onto the ground surface.

5. Method according to any of the preceding claims, wherein features which were detected by a sensor system (43) of the motor vehicle (40) are correlated with features of the map in order to determine (10) the pose of the motor vehicle (40) relative to the map.

6. Computer-readable storage medium comprising instructions that, when executed by a computer, cause the computer to execute the steps of a method according to any of claims 1 to 5 for controlling a display of an augmented reality head-up display device (41) for a motor vehicle (40).

7. Device (20) for controlling a display of an augmented reality head-up display device (41) for a motor vehicle (40), comprising:
- a pose determination unit (22) for determining (10) a pose of the motor vehicle (40) relative to a map;
- an extraction unit (23) for extracting (11) reference points from the map, wherein the reference points originate from a surface in a field of view of a driver of the motor vehicle (40) and are calculated from a previously calculated geometric abstraction of a topography stored in the map, and wherein the reference points are extracted from a map region in the direction of travel of the motor vehicle (40), which map region comprises a main region and an extended region dependent on a speed of the motor vehicle (40);
- a transformation unit (24) for transforming (12) the reference points into vehicle coordinates, wherein the transformed reference points represent the course of a surface in or on which a virtual object (60) is to be displayed;
- a graphics unit (25) for generating (13) the virtual object (60) for contact-analogous display by the augmented reality head-up display device (41), taking into account the transformed reference points, wherein graphic elements of the virtual object (60) are adapted to a course of the transformed reference points in such a way that the visual impression is created whereby the graphic elements lie in the surface represented by the transformed reference points or are positioned on this surface; and
- an output (28) for outputting (14) the virtual object (60) for display by the augmented reality head-up display device (41).

8. Motor vehicle (40) having an augmented reality head-up display device (41), **characterized in that** the motor vehicle (40) comprises a device (20) according to claim 7 or is designed to execute a method according to any of claims 1 to 5 for controlling a display of the augmented reality head-up display device (41).

## Revendications

1. Procédé de commande d'un affichage d'un dispositif d'affichage tête haute à réalité augmentée (41) pour un véhicule automobile (40), comportant les étapes :
- de détermination (10) d'une pose du véhicule automobile (40) par rapport à une carte ;
- d'extraction (11) de points de référence de la carte, dans lequel les points de référence proviennent d'une surface dans un champ de vision d'un conducteur du véhicule automobile (40) et sont calculés à partir d'une abstraction géométrique calculée au préalable d'une topographie qui est stockée dans la carte, et dans lequel les points de référence sont extraits d'une zone de carte dans la direction de déplacement du véhicule automobile (40), qui comprend une zone de base et une zone étendue dépendant d'une vitesse du véhicule automobile (40) ;
- de transformation (12) des points de référence en coordonnées de véhicule, dans lequel les points de référence transformés représentent le tracé d'une surface dans laquelle ou sur laquelle un objet virtuel (60) doit être représenté ;
- de génération (13) de l'objet virtuel (60) pour un affichage analogue à un contact par le dispositif d'affichage tête haute à réalité augmentée (41) en tenant compte des points de référence transformés, dans lequel des éléments graphiques de l'objet virtuel (60) sont adaptés à un tracé des points de référence transformés de telle sorte qu'il en résulte l'impression optique que les éléments graphiques se trouvent dans la surface représentée par les points de référence transformés ou se tiennent sur cette surface ; et
- de sortie (14) de l'objet virtuel (60) pour un affichage par le dispositif d'affichage tête haute à réalité augmentée (41).

2. Procédé selon la revendication 1, dans lequel l'abstraction géométrique de la topographie comprend des polynômes unidimensionnels ou bidimensionnels ou un quadrillage.

3. Procédé selon la revendication 1 ou 2, dans lequel la surface dans le champ de vision du conducteur du véhicule automobile (40), dont proviennent les points de référence, est une surface de sol.

4. Procédé selon la revendication 3, dans lequel, lors de la génération (12) de l'objet virtuel (60), des éléments graphiques de l'objet virtuel (60) sont transformés et déformés sur la surface du sol.

5. Procédé selon l'une des revendications précédentes, dans lequel, pour déterminer (10) la pose du véhicule automobile (40) par rapport à la carte, des caractéristiques reconnues par un système de capteurs (43) du véhicule automobile (40) sont corrélées avec des caractéristiques de la carte.

6. Support d'enregistrement lisible par ordinateur pourvu d'instructions, lesquelles, lors de leur exécution par un ordinateur, amènent l'ordinateur à exécuter les étapes d'un procédé selon l'une des revendications 1 à 5 pour la commande d'un affichage d'un dispositif d'affichage tête haute à réalité augmentée (41) d'un véhicule automobile (40).

7. Dispositif (20) de commande d'un affichage d'un dispositif d'affichage tête haute à réalité augmentée (41) pour un véhicule automobile (40), comportant :
- une unité de détermination de pose (22) pour déterminer (10) une pose du véhicule automobile (40) par rapport à une carte ;
- une unité d'extraction (23) pour extraire (11) des points de référence de la carte, dans lequel les points de référence proviennent d'une surface dans un champ de vision d'un conducteur du véhicule automobile (40) et sont calculés à partir d'une abstraction géométrique calculée au préalable d'une topographie qui est stockée dans la carte, et dans lequel les points de référence sont extraits d'une zone de carte dans la direction de déplacement du véhicule automobile (40), qui comprend une zone de base et une zone étendue dépendant d'une vitesse du véhicule automobile (40) ;
- une unité de transformation (24) pour transformer (12) les points de référence en coordonnées de véhicule, dans lequel les points de référence transformés représentent le tracé d'une surface dans laquelle ou sur laquelle un objet virtuel (60) doit être représenté ;
- une unité graphique (25) pour générer (13) l'objet virtuel (60) en vue d'un affichage analogue à un contact par le dispositif d'affichage tête haute à réalité augmentée (41) en tenant compte des points de référence transformés, dans lequel des éléments graphiques de l'objet virtuel (60) sont adaptés à un tracé des points de référence transformés de telle sorte qu'il en résulte l'impression optique que les éléments graphiques se trouvent dans la surface représentée par les points de référence transformés ou se tiennent sur cette surface ; et
- une sortie (28) pour sortir (14) l'objet virtuel (60) pour un affichage par le dispositif d'affichage tête haute à réalité augmentée (41).

8. Véhicule automobile (40) comportant un dispositif d'affichage tête haute à réalité augmentée (41), **caractérisé en ce que** le véhicule automobile (40) présente un dispositif (20) selon la revendication 7 ou est configuré pour exécuter un procédé selon l'une des revendications 1 à 5 pour la commande d'un affichage du dispositif d'affichage tête haute à réalité augmentée (41).
